# EUROPÄISCHE PATENTSCHRIFT

(11) **EP 1 297 582 B1**
(45) Veröffentlichungstag und Bekanntmachung des Hinweises auf die Patenterteilung: **03.03.2004**
(21) Anmeldenummer: 01965044.9
(22) Anmeldetag: 28.06.2001
(51) Int. Cl.: H01M 8/04

(54) **VERFAHREN ZUR REGELUNG DES WÄRME- UND/ODER STROMBEDARFSGEFÜHRTEN BETRIEBS VON BRENNSTOFFZELLENANLAGEN**
METHOD FOR REGULATING OPERATION OF FUEL CELL INSTALLATIONS CONTROLLED ACCORDING TO HEAT AND/OR POWER REQUIREMENT
PROCEDE POUR REGULER LE FONCTIONNEMENT DE SYSTEMES DE CELLULES ELECTROCHIMIQUES EN FONCTION DES BESOINS EN CHALEUR ET EN COURANT

(30) Priorität: 30.06.2000 DE 10031864
(43) Veröffentlichungstag der Anmeldung: 02.04.2003
(73) Patentinhaber: Viessmann Werke GmbH & Co KG, 35107 Allendorf (DE)
(72) Erfinder: SCHOLTA, Joachim, 89278 Nersingen (DE); JÖRISSEN, Ludwig, 89231 Neu-Ulm (DE)
(74) Vertreter: Wolf, Günter, Dipl.-Ing.
(86) Internationale Anmeldenummer: PCT/EP2001/007373
(87) Internationale Veröffentlichungsnummer: WO 2002/001657

(56) Entgegenhaltungen:
- WO-A-97/42673
- DE-A- 19 517 813
- US-A- 3 585 078
- US-A- 3 745 047
- PATENT ABSTRACTS OF JAPAN vol. 013, no. 594 (E-867), 27. Dezember 1989 (1989-12-27) & JP 01 248477 A (HITACHI LTD;OTHERS: 01), 4. Oktober 1989 (1989-10-04)

## Beschreibung

Die Erfindung betrifft ein Verfahren zur Regelung des wärme- und/oder strombedarfsgeführten Betriebes von Brennstoffzellenanlagen.

Brennstoffzellen, besonders solche mit mittlerer oder höherer Arbeitstemperatur sind aufgrund ihres hohen Wirkungsgrades und ihrer niedrigen Schadstoff- und Geräuschemissionen zur kombinierten Erzeugung von Strom und Wärme in kleineren und mittleren Einheiten sehr gut geeignet.

Technisch am weitesten entwickelt ist zur Zeit die Phosphorsäure-Brennstoffzelle (PAFC), die bereits kommerziell angeboten wird. Die angebotene Einheit besitzt eine elektrische Leistung von 200 kW. Die Zelle ist für stromgeführten Betrieb ausgelegt, kann jedoch auch zur Auskopplung von Wärme eingesetzt werden. Systembedingt darf die Rücklauftemperatur höchstens 33 °C betragen. Ist diese höher, wird ein Zusatzkühlsystem aktiviert, welches die überschüssige Wärme an die Umgebungsluft abgibt.

Brennstoffzellen besitzen im Gegensatz zu Verbrennungsmotoren keine direkte Möglichkeit der Leistungsregelung über die Brennstoffzufuhr, da sowohl der anoden- als auch der kathodenseitige Gasumsatz nur etwa 80 bzw. 50 % betragen darf. Da die Umsatzrate nach dem Faraday'schen Gesetz proportional zum Zellstrom ist, wird bei Brennstoffzellen der Zellstrom als Führungsgröße gewählt und die Gasströme entsprechend dem vorgewählten Zellstrom gesteuert.

Soll die Leistung der Brennstoffzelle nicht nach dem jeweiligen Netzbedarf, sondern nach dem Wärmebedarf der Nutzlast ausgerichtet werden, wird das Verfahren der Kennfeldanpassung gewählt, nach dem die Wärmeabgabe der Zelle in Abhängigkeit betriebsrelevanter Größen ermittelt wird und nach diesem Kennfeld der passende Strom von Hand eingestellt wird (H. Knappstein: Blockheizkraftwerk mit Brennstoffzellen, GASWÄRME International, 43(1994), S. 139-45). Dieses Verfahren wird bei weitgehend stationärem Wärmebedarf oder geringen Schwankungen desselben angewandt, führt jedoch bei stärkeren Schwankungen oder auch bei einer Änderung der Zellcharakteristik infolge Alterung sowie bei Änderungen in der Erdgasqualität zu Fehlanpassungen. Diese können wiederum bewirken, daß entweder nicht ausreichend Wärme zur Verfügung steht oder überschüssige Wärme über den Zusatzkühler abgeführt werden muß, was dann zu einer Verminderung des Gesamtwirkungsgrads führt.

Eine Regelung in der Form, daß wie bei Blockheizkraftwerken nach dortigem Stand der Technik Kessel in Stufen ab- oder zugeschaltet werden, ist bei Brennstoffzellen nicht anwendbar, da ein häufiges An- und Abschalten zu einer Verschlechterung der Zelle führt bzw. wegen der auftretenden Anfahrverluste unwirtschaftlich ist.

In der Patentliteratur (DE 21 57 722 A und DE 19 49 184 A) wird ein Regelverfahren zur Regelung der Brennstoffzufuhr von Brennstoffzellen nach einem Steuersignal genannt. Dieses beinhaltet jedoch kein Verfahren zur Erzeugung des Steuersignals im Hinblick auf einen wärmegeführten Betrieb der Brennstoffzelle.

EP 03 87 702 A2 beinhaltet ein Verfahren zum Regeln der Vor- bzw. Rücklauftemperatur einer Warmwasser-Heizungsanlage. Gegenstand dieses Verfahrens ist die leistungsabhängige Anwendung eines Zweipunkt- oder Stetigregelverfahrens zur Regelung einer Warmwasser-Heizungsanlage und beinhaltet im Gegensatz zu der vorliegenden Erfindung den fallweise wechselnden Einsatz von Zweipunkt- und Stetigregelung bei einem Gaskessel. Bezogen auf den Betrieb von Brennstoffzellen werden keine Aussagen getroffen, insbesondere werden keine Angaben zum Zellstrom als wirksame Steuergröße für den wärmegeführten Betrieb einer solchen Anlage gemacht.

EP 03 77 151 A1 beinhaltet ein Verfahren zur Regelung von Hochtemperaturbrennstoffzellen, welches die Zelltemperatur über die Vor- und Nachverbrennung von Gasströmen regelt und im Gegensatz zur vorliegenden Erfindung primär keine Regelung der Wärmeproduktion bewirken soll.

US 50 23 151 A beinhaltet die Regelung des Kühlkreislaufs von Brennstoffzellen mit dem Ziel einer konstanten zellseitigen Kühlwassereinlaßtemperatur mittels eines regelbaren Bypasses für einen im Kühlwasserkreislauf befindlichen Wärmetauscher. Die Wärmeabgabe der Brennstoffzelle selbst wird hiernach nicht geregelt und somit auch kein Verfahren zur Durchführung eines wärmegeführten Betriebs angegeben.

In DE 43 22 765 C1 sowie in WO 98 / 32185 wird ein Verfahren zur Regelung der elektrischen Leistung von Brennstoffzellen über die Regelung des Oxidationsmittel-Massenstroms beschrieben. Dieses Verfahren ist für den Blockheizkraftwerksbetrieb von Brennstoffzellen nicht sinnvoll, da sich nach diesem Verfahren der elektrische Wirkungsgrad des Systems im Teillastbetrieb verschlechtern würde.

In DE 195 17 813 C2 wird ein Verfahren zur Regelung der Stromerzeugung von Brennstoffzellen im wärmegeführten Betrieb beschrieben, nach dem der Strom der Brennstoffzelle als Stellgröße über die Vorlauf- oder Rücklauftemperatur des Kühlwärmekreislaufs als Regelgröße mit Hilfe eines kontinuierlichen oder quasikontinuierlichen Regelverfahrens geregelt wird. Zu diesem Zweck wird dort auch die Regelung der Gasströme über einen zweiten, gegebenenfalls mit einem gegenüber der Brennstoffzellen-Stromregelung mit einem zeitlichen Vorlauf versehenen Regelpfad beschrieben.

Ziel bei der Konstruktion einer zur Strom- und Wärmeversorgung geeigneten Anlage ist ein möglichst einfacher und damit kostengünstiger Systemaufbau. Die vorliegende Erfindung bezweckt gegenüber dem durch DE 195 17 813 C2 gegebenen Stand der Technik eine weitere Vereinfachung der Systemauslegung verbunden mit einer erweiterten Regelbarkeit des Systems.

Die Erfindung bezweckt die kontinuierliche sowie die Brennstoffzelle schonende und verlustfreie Anpassung der Wärmeproduktion der Brennstoffzelle an den aktuellen Wärmebedarf unter Berücksichtigung eines möglichst einfachen Systemdesigns.

Darüber hinaus bezweckt die Erfindung eine Entkoppelung der Stromund Wärmeerzeugung, soweit dieses innerhalb des Systems möglich ist.

Der Erfindung liegt die Aufgabe zugrunde, eine Fahrweise der Brennstoffzelle zu entwickeln, die diese Anpassung unter möglichst einfachem Systemdesign ermöglicht und einen ausreichenden Abstand zu den Grenzwerten der Prozeßführung auch bei ständigen Schwankungen des Wärme- oder Strombedarfs gewährleistet.

Die erfindungsgemäße Lösung besteht in der Regelung der Wärmeproduktion der Brennstoffzelle anhand der Vor- oder Rücklauftemperatur des Wärmekreislaufs. Als Stellgröße dient hierbei der der Brennstoffzelle zugeführte Anodengasstrom, in dem bei konstantem oder variierendem Stackstrom der Anodengasstrom über die Vorlauf- oder Rücklauftemperatur des Wärmekreislaufs in Abhängigkeit der benötigten Wärmemenge geregelt oder nach einem Kennlinienfeld gesteuert wird.

Die Erfindung nutzt die Tatsache aus, daß Brennstoffzellen über einen weiten Lastbereich kontinuierlich regelbar sind und innerhalb weiter Umsatzbereiche gefahren werden können.

Die Erfindung besteht somit in der Anwendung einer kontinuierlichen Regelung oder Steuerung des Anodengasstroms bei konstantem oder variierendem Zell- bzw. Stackstrom.

Der Wärmekreislauf kann durch einen Wärmetauscher in einen die Brennstoffzelleneinheit umfassenden Kühlmittelkreislauf und in einen Nutzwärmekreislauf, welcher dann den Wärmetauscher und den Wärmeverbraucher, der auch aus einem oder mehreren Wärmetauscherkreisläufen bestehen kann, umfaßt, aufgeteilt sein.

Erfindungsgemäß erfolgt die Regelung der Wärmemenge durch Steuerung des Anodengasstroms über die Gasversorgungseinheit. Der durch den Brennstoffzellen-Stapel fließende Strom kann hierbei ganz oder teilweise mitgeführt werden. Gegenüber dem in DE 195 17 813 C2 beschriebenen Verfahren, erfolgt erfindungsgemäß eine Regelung des Gasstroms unabhängig oder mit nur teilweise mitgeführtem Zell- bzw. Stackstrom, so daß ein Betrieb des Systems mit variablem Umsatzgrad in der Brennstoffzelle resultiert. Für die Mitführung des Stackstroms sind erfindungsgemäß mehrere Konzepte möglich:
1. Konstanthaltung des Stackstroms und damit Variation a) des Umsatzgrades und b) der Wärmemenge unter fast vollständiger Konstanthaltung der Stromerzeugung.
2. Teilweise Mitführung des Stackstroms unter Wirkungsgradaspekten. Die Optimierung kann hierbei sowohl a) im Hinblick auf den elektrischen Wirkungsgrad oder b) im Hinblick auf den Gesamtnutzungsgrad des Systems erfolgen.
3. Entkoppelung der Strom- und Wärmeerzeugung durch getrennte Regelung von Stack- und Anodengasstrom. Hierbei kann der Vorrang sowohl auf den Strom- als auch auf den Wärmebedarf gelegt werden, sobald Zellparameter (z.B. der gasseitige Umsatzgrad) die Systemgrenzen erreichen. In diesem Fall wird bei Wärmeregelungsvorrang der Stackstrom so mitgeführt, daß im Brennstoffzellen-Stack die zulässigen Systemgrenzen, speziell der zulässige Gas-Umsatzgrad eingehalten wird. Bei Stromregelungsvorrang wird dagegen der Anodengasstrom soweit mitgeführt, daß im Brennstoffzellen-Stack der zulässige Gas-Umsatzgrad eingehalten wird. Solange dies nicht der Fall ist, können Gassströme und Stackstrom unabhängig voneinander variiert werden. In beiden Fällen ist der Stackstrom die Stellgröße für die elektrische Leistung, während der Gasstrom die Stellgröße für die Wärmemenge darstellt.

Die konkrete Regelung des Anodengasstroms hängt von dem gewählten Betriebsgas und der verwendeten Gasaufbereitungs- bzw. versorgungseinheit ab. Im einfachsten Fall wird lediglich ein Gasstrom aus einem Vorratsbehälter geregelt und das Restanodengas der Brennstoffzelle entweder verbrannt oder mittels einer bekannten Rezyklierung wieder in den Einlaß der Brennstoffzelle zurückgeführt. In allen anderen Fällen fällt bei der Brenngaserzeugung ein CO₂-haltiges Gas an, welches nach Umsatz in der Brennstoffzelle zu einem Schwachgas führt, welches einer Restgasverbrennung in einem Flamm- oder katalytischen Brenner zugeführt werden kann. Die bei diesem Prozeß entwickelte Wärme wird entweder dem Primär(Kühl)- oder Sekundär(Nutzwärme)-Kreislauf des Systems zugeführt oder zur teilweisen oder vollständigen Deckung der in der Anodengasaufbereitung benötigten Reaktionswärme verwendet.

Unabhängig von der realisierten Variante wird beim erfindungsgemäßen Regelverfahren unmittelbar oder mittelbar der Ausgangsgasstrom der Gasaufbereitungseinheit geregelt oder gestellt. Die Regelung oder Steuerung des Brennerstroms der Gasaufbereitungseinheit erfolgt in einer an sich bekannten eigenständigen Steuerung/Regelung. Soweit der Restgasstrom der Gasaufbereitungseinheit zur Bereitstellung von Reaktionswärme zugeführt wird, wird ein entsprechend geringerer Primärgasanteil zur Bereitstellung von Reaktionswärme eingesetzt.

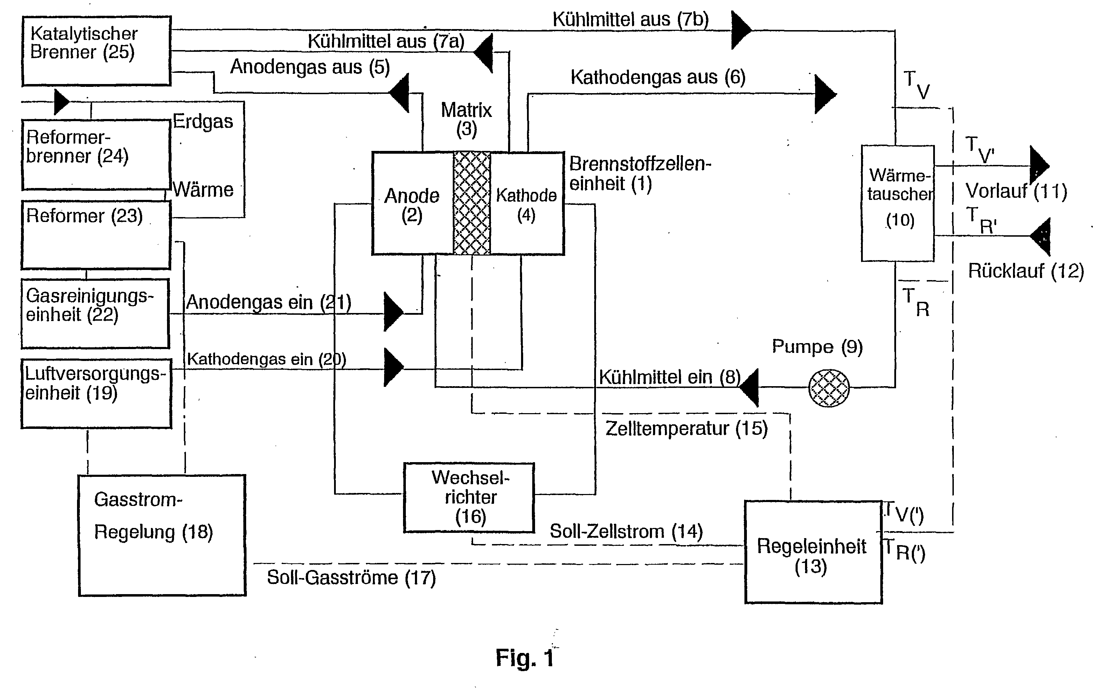

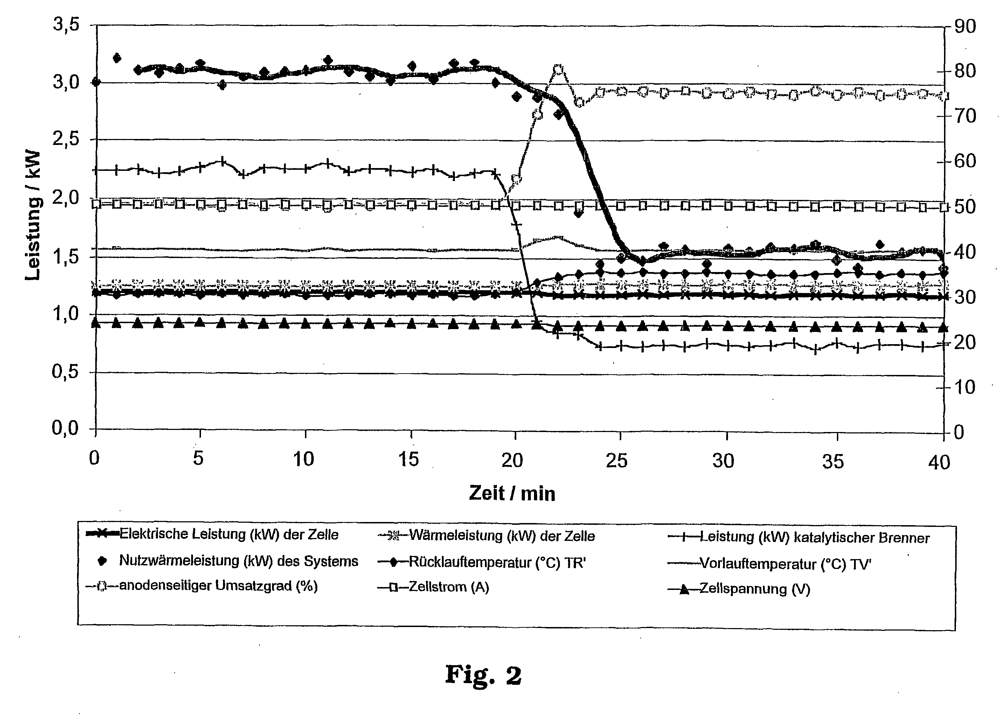

Ein Ausführungsbeispiel der Erfindung wird im folgenden näher beschrieben und ist in den Figuren 1 und 2 näher veranschaulicht:
Fig. 1: Schaltbild eines erfindungsgemäßen Regelverfahrens in einem Brennstoffzellen-Blockheizkraftwerk
Fig. 2: Zeitlicher Verlauf der Ist-Werte für die elektrische Leistung und für den Wärmestrom (linke y-Achse) sowie des Zellstroms, der Zellspannung, des anodenseitigen Umsatzgrades und der Vor- und Rücklauftemperatur (rechte y-Achse) bei Regelung auf kostante Vorlauftemperatur T_{V'} im Nutzwärmekreis

Figur 1 gibt das Schaltbild eines erfindungsgemäßen Regelverfahrens in einem Brennstoffzellen-Blockheizkraftwerk wieder.

Eine Brennstoffzelleneinheit 1, die aus mindestens einer aus Anode 2, Matrix 3 und Kathode 4 bestehenden Einzelzelle augebaut ist, wird von einer aus Reformerbrenner 24, Reformer 23 und Gasreinigungseinheit 22 bestehenden Brenngasversorgungseinheit anodenseitig über Leitung 21 und durch eine Luftversorgungseinheit 19 über Leitung 20 kathodenseitig mit Betriebsgasen versorgt. Die Restgase werden gasseitig über einen Anodengasausgang 5 in einen katalytischen Brenner 25 und luftseitig über einen Kathodengasausgang 6 abgeführt. Die Brennstoffzelleneinheit 1 wird von einem aus einer Pumpe 9, einer Kühlmittelzuführung 8, einer Kühlmittelabführung 7a und 7b sowie einem Wärmetauscher 10 bestehendem Kühlmittelkreislauf gekühlt. Im Wärmetauscher 10 wird das Kühlmittel mit einem aus Vorlauf und Rücklauf bestehendem Nutzwärmekreislauf gekühlt. Die Vorlauftemperatur T_{V} des Kühlmittels wird der Regeleinheit 13 zugeführt, welche über die Gasstrom-Regelung 18 die Temperatur T_{V'} durch Variation des anodenseitigen Gasstroms und damit des anodenseitigen Umsatzgrades auf einen konstanten Wert regelt. Der kathodenseitige Gasstrom wird nach Stand der Technik in Abhängigkeit vom Zellstrom und der Kühlmitteltemperatur T_{R} geregelt. Der Zellstrom, der durch den Wechselrichter 16 eingestellt wird, wird hierbei auf einem konstanten Wert gehalten. Als Stellgröße für die produzierte Wärmemenge dient der Anodengasstrom. Wahlweise kann der Zellstrom ebenfalls variiert werden, um wechselnde Stromanforderungen zu erfüllen. Im Ausführungsbeispiel wird die Anlage damit sowohl wärme- als auch strombedarfsgeführt betrieben. Grenzen der Entkoppelung liegen lediglich vor, wenn z.B. bei hohem Strombedarf ein maximaler Anodenumsatzgrad eingestellt wird und die produzierte Wärmemenge dennoch über dem Bedarfswert zur Aufrechterhaltung von T_{V'} liegt. In diesem Fall wird im Ausführungsbeispiel auf Vorrang der Wärmemengenregelung geschaltet und so der Zellstrom solange vermindert, bis bei maximalem Umsatzgrad die Wärmeproduktion dem Bedarf angepaßt ist. Die Ausgangssignale der Anodengasstromregelung werden zur Ansteuerung von Gasdurchflußreglern (nicht gezeigt), die zusammen mit einer Gasversorgung die Gasversorgungseinheit bilden, verwendet. Zur Regelung des Anodengasstroms wird die Regeleinheit 13 als eine speicherprogrammierbare Steuerung (SPS) nach dem PID-Verfahren in Verbindung mit einer Begrenzung des Anodengasstroms nach einem Minimal- und Maximalwert aufgebaut. Durch geeignete Wahl der Zeitkonstanten wird eine praktisch überschwingungsfreie Regelung der Vorlauftemperatur T_{V'} nach sprungförmiger Änderung der Wärmeabnahme im Nutzwärmekreislauf erreicht. Hierbei werden Zeitkonstanten von 5 bis 10 Minuten für die Regelung der Vorlauftemperatur bis zur Konstanz auf den Sollwert erreicht.

In Figur 2 ist die Zeitabhängigkeit der Wärme- und Stromproduktion bei einem erfindungsgemäßen Regelverfahren wiedergegeben. Es zeigt sich, daß bei einer durch Anhebung der nutzwärmeseitigen Rücklauftemperatur vorgegebenen Wärmelastreduktion die nutzwärmeseitige Vorlauftemperatur mittels einer erfindungsgemäßen Regelung des anodenseitigen Gasumsatzes auf konstantem Niveau geregelt werden kann. Die Stromproduktion bleibt dabei fast konstant.

Erfindungsgemäß kann damit eine Regelung auf konstante Vorlauftemperatur bei wechselnder Wärmeabnahme sowie eine weitgehende Entkoppelung von Strom- und Wärmeproduktion erreicht werden.

## Patentansprüche

1. Verfahren zur Regelung der Wärmeproduktion von Brennstoffzellen im wärme- und/oder strombedarfsgeführten Betrieb, **dadurch gekennzeichnet, daß** bei konstantem oder variierendem Zell- oder Stackstrom der Anodengasstrom der Brennstoffzelle als Stellgröße über die Vorlauf- oder Rücklauftemperatur des Wärmekreislaufs als Regelgröße geregelt oder nach einem Kennlinienfeld gesteuert wird.

2. Verfahren nach Anspruch 1, **dadurch gekennzeichnet, daß** der Zelloder Stackstrom unter Konstanthaltung mitgeführt wird.

3. Verfahren nach Anspruch 1, **dadurch gekennzeichnet, daß** der Zelloder Stackstrom teilweise mitgeführt wird, wobei die Optimierung im Hinblick auf den elektrischen Wirkungsgrad oder den Gesamtwirkungsgrad des Systems erfolgt.

4. Verfahren nach Anspruch 1, **dadurch gekennzeichnet, daß** durch getrennte Regelung von Zell- oder Stack- und Anodengasstrom eine Entkoppelung der Strom- und Wärmeerzeugung erreicht wird.

5. Verfahren nach mindestens einem der Ansprüche 1 bis 4, **dadurch gekennzeichnet, daß** der Wärmekreislauf durch einen direkten Kreislauf unter Einbeziehung von Brennstoffzelleneinheit und Verbraucher gebildet wird.

6. Verfahren nach mindestens einem der Ansprüche 1 bis 4, **dadurch gekennzeichnet, daß** der Wärmekreislauf aus einem Kühlmittelkreislauf, einem Wärmetauscher und einem Nutzwärmekreislauf gebildet wird.

7. Verfahren nach Anspruch 6, **dadurch gekennzeichnet, daß** der Nutzwärmekreislauf aus einem oder mehreren Wärmetauscherkreisläufen gebildet wird.

8. Verfahren nach mindestens einem der vorangehenden Ansprüche, **dadurch gekennzeichnet, daß** die Vorlauftemperatur des Kühlmittel- oder Nutzwärmekreislaufs geregelt wird.

9. Verfahren nach mindestens einem der vorangehenden Ansprüche, **dadurch gekennzeichnet, daß** als Anodengas Wasserstoff oder ein durch Reformierung und Gasreinigung erhaltenes, wasserstoffreiches Gas eingesetzt wird.

10. Verfahren nach mindestens einem der vorangehenden Ansprüche, **dadurch gekennzeichnet, daß** zur Regelung des Anodengasstroms eine SPS-gesteuerte Regelung nach dem PID-Verfahren in Verbindung mit einer Begrenzung des Anodengasstroms nach einen Minimal- und Maximalwert verwendet wird.

## Claims

1. A method for regulating the heat production of fuel cells in an operating mode that is controlled according to heat and/or power requirements, **characterized in that** with a constant or varying cell-or stack current, the anode gas stream of the fuel cell is regulated as a correcting variable through the forward or backward temperature of the heat circuit as a controlling variable or controlled according to a set of characteristics.

2. The method in accordance with claim 1, **characterized in that** the cell- or stack current is carried along by regulation.

3. The method in accordance with claim 1, **characterized in that** the cell- or stack current is partially carried along, with optimization being achieved in view of the electrical efficiency or the overall efficiency of the system.

4. The method in accordance with claim 1, **characterized in that** a decoupling of the power- and heat generation is achieved by separate regulation of cell- or stack-and anode gas stream.

5. The method in accordance with at least one of the claims 1 to 4, **characterized in that** the heat circuit is formed by a direct circulation that includes the fuel cell unit and consumer.

6. The method in accordance with at least one of the claims 1 to 4, **characterized in that** the heat circuit is formed by a coolant circuit, a heat exchanger and a heat gain circuit.

7. The method in accordance with claim 6, **characterized in that** the heat gain circuit is formed of one or a plurality of heat exchange circuits.

8. The method in accordance with at least one of the preceding claims, **characterized in that** the forward temperature of the coolant- or heat gain circuit is regulated.

9. The method in accordance with at least one of the preceding claims, **characterized in that** hydrogen or a hydrogen-rich gas obtained through reformation and gas purification is used as anode gas.

10. The method in accordance with at least one of the preceding claims, **characterized in that** for the regulation of the anode gas stream, an SPS-controlled regulation according to the PID-method in connection with a limit of the anode gas stream according to a minimum- and maximum value is used.

## Revendications

1. Procédé de régulation de la production de chaleur de piles à combustible en régime d'asservissement à la chaleur et/ou au besoin en courant, **caractérisé en ce qu'**en cas d'un courant de pile constant ou variant, le courant de gaz anodique de la pile à combustible est régulée en tant que variable réglante via la température de la circulation aller ou retour du circuit de chaleur en tant que grandeur de réglage, ou commandée selon un réseau de caractéristiques.

2. Procédé selon la revendication 1, **caractérisé en ce que** le courant de la pile est entraîné sous maintien constant.

3. Procédé selon la revendication 1, **caractérisé en ce que** le courant de pile est partiellement entraîné, l'optimisation se faisant dans l'optique du rendement électrique ou du rendement global du système.

4. Procédé selon la revendication 1, **caractérisé en ce que** par régulation séparée du courant de la pile et du courant de gaz anodique, un découplage de la production de courant et de chaleur est obtenu.

5. Procédé selon au moins l'une des revendications 1 à 4, **caractérisé en ce que** le circuit de chaleur est formé par un circuit direct incorporant unité de piles à combustible et consommateur.

6. Procédé selon au moins l'une des revendications 1 à 4, **caractérisé en ce que** le circuit de chaleur est constitué d'un circuit d'agent de refroidissement, d'un échangeur de chaleur et d'un circuit de chaleur utile.

7. Procédé selon la revendication 6, **caractérisé en ce que** le circuit de chaleur utile est constitué d'un ou de plusieurs circuits d'échangeur de chaleur.

8. Procédé selon au moins l'une des revendications qui précèdent, **caractérisé en ce que** la température de la circulation aller du circuit d'agent de refroidissement ou de chaleur utile est régulée.

9. Procédé selon au moins l'une des revendications qui précèdent, **caractérisé en ce qu'**en tant que gaz anodique, on utilise de l'hydrogène ou un gaz riche en hydrogène obtenu par reformage et purification de gaz.

10. Procédé selon au moins l'une des revendications qui précèdent, **caractérisé en ce que** pour la régulation du courant de gaz anodique, on utilise une régulation commandée par SPS selon le procédé PID en combinaison avec une limitation du courant de gaz anodique après une valeur minimum et maximum.
